# EUROPEAN PATENT APPLICATION

(11) **EP 4 752 530 A1**
(43) Date of publication of application: **03.06.2026**
(21) Application number: 25209563.3
(22) Date of filing: 17.10.2025
(51) Int. Cl.: G01N 19/04, G06T 7/00

(54) **A METHOD FOR IDENTIFYING DEFECTS IN A PACKAGE**

(30) Priority: 02.12.2024 IT 202400027219
(71) Applicant: Tetra Laval Holdings & Finance S.A., 1009 Pully (CH)
(72) Inventor: Belloni, Giulia, 41123 Modena (IT); Egidi, Sara, 41123 Modena (IT); Scarabelli, Paolo, 41123 Modena (IT); Roncaglia, Riccardo, 41123 Modena (IT); Zalloni, Nicola, 41123 Modena (IT)
(74) Representative: Tetra Pak Patent Attorneys

(57) **Abstract**

A computer-implemented method (800) for identifying defects in a package (102a,b) is disclosed. The method (800) comprises
placing (802) the package in an apparatus for delaminating the package (102a,b),
attaching (804) the first side (302a) to a first clamping device (402a) of the apparatus (400) and the second side (302b) to a second clamping device (402b) of the apparatus (400),
tearing (806) apart the weld (104a,b,106a,b) by moving the first clamping device (402a) and second clamping device (402b) away from each other,
obtaining (808) a first image (600b), depicting the weld (104a,b, 106a,b), at a first point of time (t1),
obtaining (810) a second image (600c), depicting the weld (104a,b,106a,b), at a second point of time (t2), wherein the second point of time (t2) is subsequent to the first point of time (t1),
processing (812) the first image (600b) by identifying a sealing line (404)at the first point of time,
processing (814) the second image (600c) by identifying the sealing line (404) between the first and second side (302a,b) of the laminate at the second point of time,
wherein the first and second image (600b,600c) input to the machine learning model (414) comprise the sealing line (404) identified,
applying (816) a machine learning model (414), wherein the machine learning model receives as inputs the first and second image (600b,c), and outputs a prediction of the defects, wherein the machine learning model (414) has been trained by means of reference first and second reference images indicative of the defects for reference packages associated with the first and second reference images.

## Description

### Technical Field

The invention relates to packaging technology. More particularly, it is related to a method for identifying defects in a package.

### Background Art

Today, most packaging lines have a package quality assessment station in which sample packages are assessed to make sure that the produced packages meet set quality standards. In roll-fed packaging machines, bottom sealings and top sealings are assessed to make sure that adequate package integrity is achieved. There are different techniques for assessing such sealings. For packages comprising one or more cellulose-based layers, it is known to use a sealing quality testing apparatus that is arranged to tear apart a transversal sealing, such as the bottom sealing or the top sealing, in a controlled manner. Such apparatus is disclosed in WO2023/144093A1.

By being able to study how the transversal sealing is torn apart, a quality assessment of the transversal sealing can be made. For instance, by being able to see how the different layers are disjoined, an indication about whether or not the package would be able to withstand package integrity tests could be achieved.

Even though there are processes and equipment for assessing packages in place today, there is room for improvement. By having a better understanding of the sealing process, it is namely possible to identify that packages are produced that are not fulfilling set quality requirements and also to identify deviations that may in itself not be a quality issue, but may be used as a trigger for machine settings adjustment or the like.

### Summary

It is an object of the invention to at least partly overcome one or more of the above-identified limitations of the prior art. In particular, it is an object to assess the package, more particularly the transversal sealing, in way such that improved understanding of the packaging machine as well as the packaging material can be achieved with the effects that potential quality issues can be identified at an early stage, that machine settings can be adjusted in a more precise and timely manner, that potential quality issues related to the packaging material can be identified more efficiently and that a machine spare is worn out and should be replaced can be made more efficiently.

According to a first aspect it is provided a computer-implemented method for identifying defects in a package, wherein the package is made of a laminate comprising a cellulose-based layer for providing robustness and an inner protective layer for avoiding direct contact between the cellulose-based layer and a food product held inside the package, wherein the package comprising a weld formed by that the inner protective layer is heated such that this is melted, and applying a pressure such that adherence between inner protective layers of a first and second side of the laminate is achieved. The method comprises
placing the package in an apparatus for delaminating the package,
attaching the first side to a first clamping device of the apparatus and the second side to a second clamping device of the apparatus,
tearing apart the weld by moving the first clamping device and second clamping device away from each other,
obtaining a first image, depicting the weld, at a first point of time,
obtaining a second image, depicting the weld, at a second point of time, wherein the second point of time is subsequent to the first point of time,
processing the first image by identifying a sealing line at the first point of time,
processing the second image by identifying the sealing line between the first and second side of the laminate at the second point of time,
wherein the first and second image input to the machine learning model comprise the sealing line identified, and
applying a machine learning model, wherein the machine learning model receives as inputs the first and second image, and outputs a prediction of the defects, wherein the machine learning model has been trained by means of reference first and second reference images indicative of the defects for reference packages associated with the first and second reference images.

An advantage with following the sealing line during the course of tearing apart the two sides is that this line, which defines an edge of the sealing, i.e. an adherence between the two inner protective layers, will develop over time in a pattern that is linked to the sealing quality. Put differently, by following the sealing line over time, it is made possible to achieve a reliable understanding of the sealing process, thereby making it possible to detect deviations and defects, to trigger machine settings adjustments, to trigger replacements of machine parts, etc.

Further, by having the sealing line identified before the images are provided as inputs to the machine learning model arranged for predicting defects, it is made possible to improve the computational efficiency of the machine learning model.

The sealing line may undergo a dynamic evolution, shifting in shape, position and length, as the first and second sides are torn apart.

The laminate may further comprise a light shield layer, placed between the inner protective layer and the cellulose-based layer, wherein the sealing line may be defined as a line in which a first light shield layer of the first side is disjoined from a second light shield layer of the second side.

The step of processing the first image may further comprise identifying a first sealing zone boundary of the first side and a second sealing zone boundary of the second side at the first point of time, and the step of processing the second image may further comprise identifying the first sealing zone boundary of the first side and second sealing zone boundary of the second side at the second point of time.

The step of processing the first image may further comprise identifying an intersection line between the first side and the second side at the first point of time, and the step of processing the second image may further comprise identifying the intersection line at the second point of time, wherein the intersection line may be defined as a lowermost line between the first and second side.

The measurement of depth using a single camera can be accomplished through various techniques. For instance, shadows cast by the package can be analyzed to infer depth information based on their length and direction. Additionally, controlled lighting can enhance contrasts and highlight edges, providing further depth cues. Focus variation techniques, where images are taken at different focal lengths, allow for the assessment of features based on their sharpness. Furthermore, texture analysis can help in understanding depth by examining surface patterns, while advanced image processing algorithms can be employed to estimate depth from the captured images. Together, these methods facilitate a comprehensive understanding of the package's structural features despite the limitations of a single camera."

This explanation provides clarity on how depth can be measured and could enhance the overall understanding of your method.

The step of processing the first image may further comprise identifying longitudinal sealing (LS) features related to an LS strip protecting an edge of the laminate at the first point of time, and the step of processing the second image may further comprise identifying the LS features at the second point of time, wherein the LS features may be chosen from a group comprising a first LS distance between an outer triple layer boundary and a first LS strip edge, a second LS distance between the outer triple layer boundary and an inner triple layer boundary, a third LS distance being a triple layer section of the LS strip, and a fourth LS distance being a two layer section of the LS strip.

The step of processing the first image may further comprise identifying crease lines, provided on the laminate to facilitate folding of the laminate into the package, at the first point of time, and the step of processing the second image may further comprise identifying the crease lines at the second point of time.

The second side may comprise a pre-laminated hole (PLH), wherein the step of processing the first image may further comprise identifying PLH features related to the PLH at the first point of time, and the step of processing the second image may further comprise identifying the PLH features at the second point of time, wherein the PLH features may be chosen from a group comprising a PLH diameter, a PLH-to-crease line distance and a PLH boundary.

The machine learning model may be a neural network.

The method may further comprise, prior to the step of placing the package in the apparatus,
cutting the package into the first and second side.

According to a second aspect it is provided a predictor device comprising a processing unit configured to carry out the method according to the first aspect.

According to a third aspect it is provided a system for quality assessment of packages, said system comprising an apparatus for delaminating a package, a camera for capturing images, and a predictor device according to the second aspect.

According to a fourth aspect it is provided a packaging line for producing packages comprising a system according to the third aspect.

According to a fifth aspect it is provided a computer program product, loadable in a memory of at least one processing unit and comprising instructions suitable for performing the steps of the method according to the first aspect.

According to a sixth aspect it is provided a trained machine learning model configured for use in the method according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1A is a perspective view of a tube of packaging material formed into two packages.
Fig. 1B is a cross-sectional view of a transversal sealing station.
Fig. 2A to 2C illustrate a transversal sealing process.
Fig. 3 illustrates a top view of a longitudinal sealing section of a transversal sealing.
Fig. 4A illustrates a system for quality assessment of packages.
Fig. 4B illustrates a packaging line comprising the system illustrated in fig. 4A.
Fig. 5A to 5D illustrate four examples of transversal sealings torn apart by using the apparatus illustrated in fig. 4A.
Fig. 6A to 6C illustrate images captured at different time points during the process of tearing apart the transversal sealing.
Fig. 7 illustrates an image captured during the tearing process, wherein the package being assessed is provided with a pre-laminated hole (PLH).
Fig. 8 is a flowchart illustrating a method for identifying defects in the package.

### Detailed Description

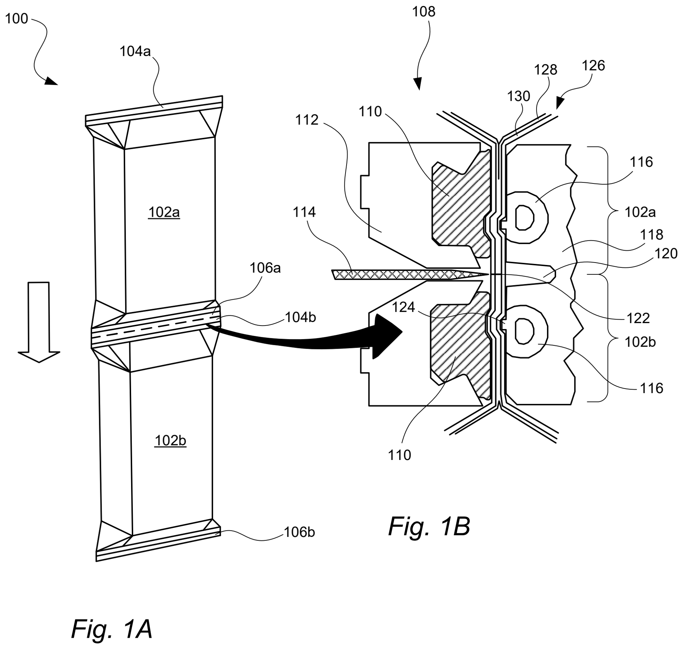

Fig. 1A illustrates two packages, an upper and a lower package 102a,b, placed after one another. In a roll-fed packaging machine, such packages may be formed by having a roll of packaging material, herein also referred to as a laminate, fed into the machine. The roll is unwound and a web of packaging material is sterilized such that microorganisms that are harmful to consumers are removed. Once sterilized, the web is formed into a tube 100 by steering the web such that longitudinal edges of the web meet and thereafter attaching these edges by making a longitudinal sealing. Next, the tube 100 is filled with food product, such as milk, from above. In a lower end of the tube 100, transversal sealings, also referred to as welds, in the form of bottom sealings 104a,b and top sealings 106a,b are provided. As illustrated in fig. 1B, these transversal sealings may be provided by using a transversal sealing apparatus 108. To provide for that the forming of packages can be made continuously, the top and bottom sealings on subsequent packages are made simultaneously before the lower package 102b is cut off from the tube 100. By way of example, as illustrated in fig. 1A, in case the packages 102a,b are formed with tops facing downward, the top sealing 106a of the upper package 102a may be formed at the same time as the bottom sealing 104b of the lower package 102b is formed. Once the transversal sealings, or welds, are made, the lower package 102b can be cut off from the upper package 102a.

Referring back to fig. 1B, the transversal sealing apparatus 108 may be provided such that two welds are made at the same time. Even though this comes with several advantages in roll-fed packaging machines, it should be noted that for so-called blanks fed systems, the transversal sealings are not made in pairs. The reason for this is that the blanks are provided to the filling machine pre-cut and pre-sealed longitudinally. Typically, after being erected into a sleeve-shaped form, the packages are transversally sealed one by one. Thus, even though the concepts herein are described in the context of roll-fed packaging machines, it should be understood that these are not restricted to such machines unless explicitly stated so.

The transversal sealing (TS) apparatus 108 illustrated is an induction heat sealing apparatus, that is, electric currents are induced in the packaging material, or laminate, and as an effect, heat is generated. The heat in turn provides for that inner protective layers, which may be polymer-based layers, melt such that, after a pressure has been applied, the transversal sealing is formed. Another example of technology that can be used for forming transversal sealings is ultrasonic sealing technology.

As illustrated in fig. 1B, the transversal sealing apparatus 108 can comprise two dollies 110 held in a cutting rail 112. In a hole in the cutting rail 112, a knife 114 may be provided such that the laminate can be cut after the transversal sealings have been made. Opposite to the cutting rail 118, that is, on the other side of the tube 100, an inductor coil 116 may be provided. This may be held in an inductor body 118. To receive the knife 114, the inductor body 118 may comprise a cutting groove 120. As illustrated, during cutting, the laminate is cut along a cutting line 122 such that the packages are separated from each other. Further, the inductor coil 116 may be provided with ridges 124 such that a more efficient heating can be achieved. The ridges may be adjusted to compensate for the longitudinal sealing section of the tube 100 in which three layers of laminate are provided.

Most often the laminate 126 comprises a number of different polymer layers with different properties, a number of carton-based layers and often an Aluminum foil or other light shield layer. Even though there may be several advantages of having a large number of different layers, in the example illustrated, the laminate is comprising an inner protective layer 128 and a cellulose-based layer 130, which may be a carton layer.

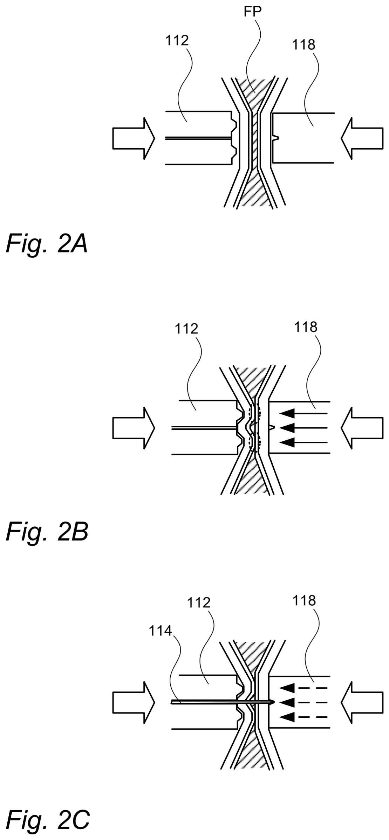

Fig. 2A to 2C illustrate the transversal sealing process from a side view. As illustrated in fig. 2A, in a first step, the cutting rail 112 is moved towards the inductor body 118. By doing so, product-wetted surfaces are pushed towards one another. In a next step, illustrated in fig. 2B, pressure as well as heat are applied such that the sealings, or welds, are formed. As illustrated, by having the tube 100, as illustrated in fig. 1B, there will be food product residues between the two sealings. By arranging the transversal sealing apparatus 108 wisely, secure sealings can however be achieved despite the product remains. Having secure sealings, that is, sealings that are providing adequate package integrity, is crucial for making sure that food safety requirements can be fulfilled, but also that a shelf life of the food product can be extended. In a third step, illustrated in fig. 2C, the knife 114 is pushed through the laminate 126 and into the groove 120 while the laminate is cooled via the inductor body such that the lower package is separated from the tube 100.

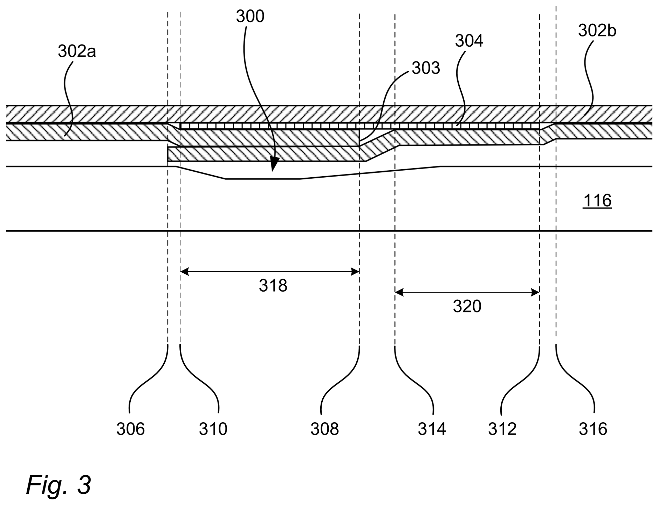

Fig. 3 illustrates the transversal sealing from a top view by way of example, more particularly a longitudinal sealing section of the transversal sealing is illustrated. As illustrated, when adhering a first side 302a of the laminate 126 with a second side 302b of the laminate 126, there will be two layers of laminate in all sections apart from a longitudinal sealing section, that is, the section in which the longitudinal sealing meets the transversal sealing. To compensate for this three layer section, and the increased width resulting from this extra layer, the inductor coil 116 may be provided with a recess 300. Further, to prevent that the food product FP held inside the package 102a,b is in direct contact with the cellulose-based layer 130 via an edge 303 of the laminate 126, a longitudinal sealing (LS) strip 304 may be provided on the laminate 126 such that the edge 303 is covered prior to the transversal sealings are made.

As illustrated, the transversal sealing has an outer triple layer boundary 306 and an inner triple layer boundary 308, together defining a section of the transversal sealing with three layers of the laminate 126. Further, a first LS strip edge 310 and a second LS strip edge 312 define longitudinal edge positions of the LS strip 304. An inner double layer boundary 314 and an outer double layer boundary 316 define a section of the transversal sealing in which the two layers and the LS strip are forming the transversal sealing as well as a transition section between the two layer sealing outside the transversal sealing section and the two layers and LS strip section of the transversal section, in which transition section there is no contact between the two layers, as illustrated. With respect to LS features, a triple layer section 318 can be defined as the section between the first LS strip edge 310 and the inner triple layer boundary 308, and a double layer section 320 can be defined as the section between the inner double layer boundary 314 and the second LS strip edge 312, as illustrated.

In the roll-fed packaging machines, when the packages are produced continuously from the tube 100, as described above, deviations in one part of the package may be related to other parts of the package. By way of example, a transversal shift of the LS strip may suggest that insufficient sealing has been provided in another part of the package. As will be described below, the interdependency between different features may be used for achieving a better understanding of the complex processes occurring in a roll-fed packaging machine when using environmentally friendly material such as carton or the like as a main component of the packaging material.

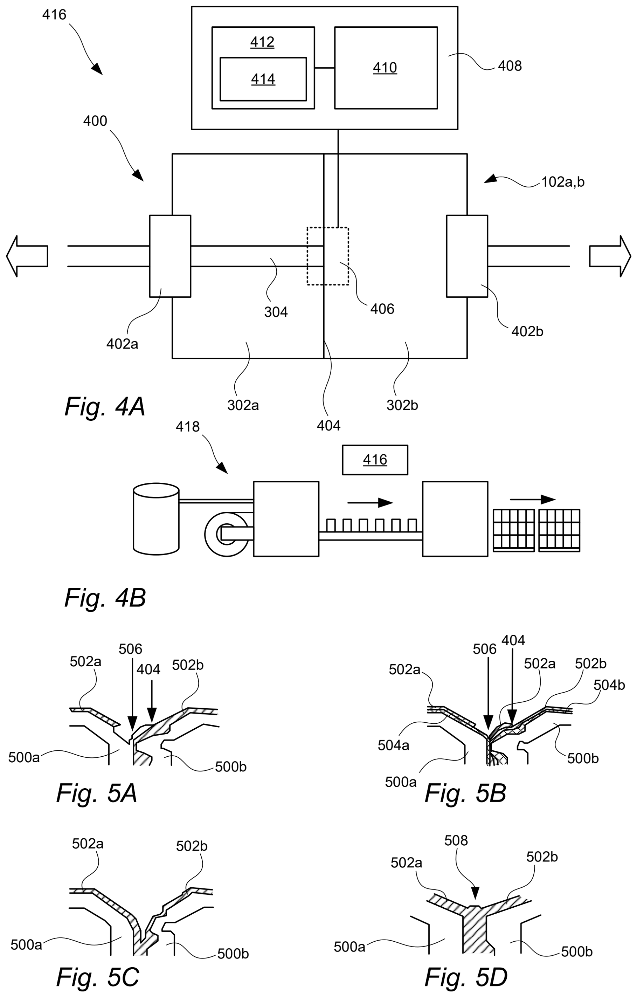

To assess quality of the transversal sealings, sample packages are collected at frequent basis and tests are performed for making sure that the package integrity is fulfilling set standards, but also for fine-tuning machine settings. Even though different approaches exist, the transversal sealing quality can be assessed by collecting the package to be used for quality assessment from the packages produced. Once a sample package is retrieved, this sample package can be prepared such that the first and second side 302a,b can be placed in an apparatus 400 for delaminating, as illustrated in fig. 4A. The first side 302a is attached to a first clamping device 402a of the apparatus 400, and second side 302b is attached to a second clamping device 402b. After the sides have been attached, the two clamping devices 402a,b are moved away from each other, as illustrated by arrows in fig. 4A, in a controlled manner such that a development of a sealing line 404 can be monitored over time. By way of example, such apparatus 400 for delaminating is described in detail in WO2023/144093A1.

As illustrated, a camera 406 may be placed above the first and second sides 302a,b. Images captured by the camera 406 can be transferred to a predictor device 408, e.g. a data processing apparatus, comprising a processing unit 410 and a memory 412 holding a machine learning model 414. The apparatus 400 for delaminating and the predictor device 408 are herein together referred to as a system 416 for quality assessment of packages. The system 416 may form part of a packaging line 418 as illustrated in fig. 4B. By way of example, the packaging line 418 may comprise the roll-fed packaging machine, fed with the food product from a tank and the laminate from a roll, and outputting the packages. As illustrated, downstream the packaging machine, the packages may be fed into downstream equipment, such as a palletizer arranged to group the packages and organize these on a pallet. Downstream the packaging machine and upstream the downstream equipment, the system 416 for quality assessment may be placed. The sample packages may be picked manually or automatically.

During delamination, that is, during a process of tearing the first and second side 302a,b apart, the transversal sealing may develop in different ways, wherein one example is illustrated in fig. 5A to 5D. In fig. 5A, the first side, depicted to the left, comprises a first cellulose-based layer 500a, while the second side, depicted to the right, comprises a second cellulose-based layer 500b. Further, the first side comprises a first inner protective layer 502a and the second side a second inner protective layer 502b. As illustrated in fig. 5A, as an effect of tearing the first and second side apart, the first inner protective layer 502a that has been merged with the second inner protective layer 502b during sealing has been moved from the first side to the second side, thereby leaving an area without any inner protective layer. In addition to the first inner protective layer 502a, it is also possible that part of the first cellulose-based layer 500a is torn off the first side during the delamination. This rupture in the cellulose-based layer 500a may be an indication that the transversal sealing is adequate, since instead of having the first and second sides separated, parts of one side is torn off and found on the other side. Since the transversal sealing, that is, the adherence between the first and second inner protective layers, is intact, the sealing line 404 is in an edge of the first inner protective layer 502a placed on the second side, as illustrated. Further, as illustrated, a tearing line 506, which may defined as a lowermost line between the first and second side, may, and often is, offset the sealing line 404. By following the development of the sealing line 404, a good understanding of the transversal sealing can be achieved. By identifying this line, and also determining positional data related to this line and having this linked to the images or used as a substitute for the images, the processing of the images for detecting defects or deviations of the transversal sealings can be made more efficiently.

Fig. 5B illustrates another situation that may occur as the first and second side are torn apart. As illustrated, unlike the situation illustrated in fig. 5A, the first side comprises a first light shield layer 504a, such as an Aluminum foil, placed between the first cellulose-based layer 500a and the first inner protective layer 502a. In a similar manner, the second side, depicted to the right, comprises a second light shield layer 504b, placed between the second cellulose-based layer 500b and the second inner protective layer 502b. As illustrated, in the situation illustrated in fig. 5B, the first and second light shield layers 504a,b are without ruptures. The first inner protective layer 502a is however ruptured and, as illustrated, part of the first inner protective layer 502a can be found on the second side. Since the attachment between the first and second inner protective layer 502a,b is giving rise to the rupture of the first inner protective layer 502a, the sealing line 404 is in the end of this attachment section. As an effect, as in the situation illustrated in fig. 5A, the sealing line 404 is offset the intersection line 506.

In case the tearing apart results in that the transversal sealing is broken, the first and the second side is moved apart and in such case there is no sealing line 404, as illustrated in fig. 5C. Another transversal sealing failure is that there is a plastic lump 508 formed in an intersection area between the first and second side as illustrated in fig. 5D. Since excessive plastic material resulting in the plastic lump 508 may result in that the package integrity cannot be guaranteed, there is no sealing line 404.

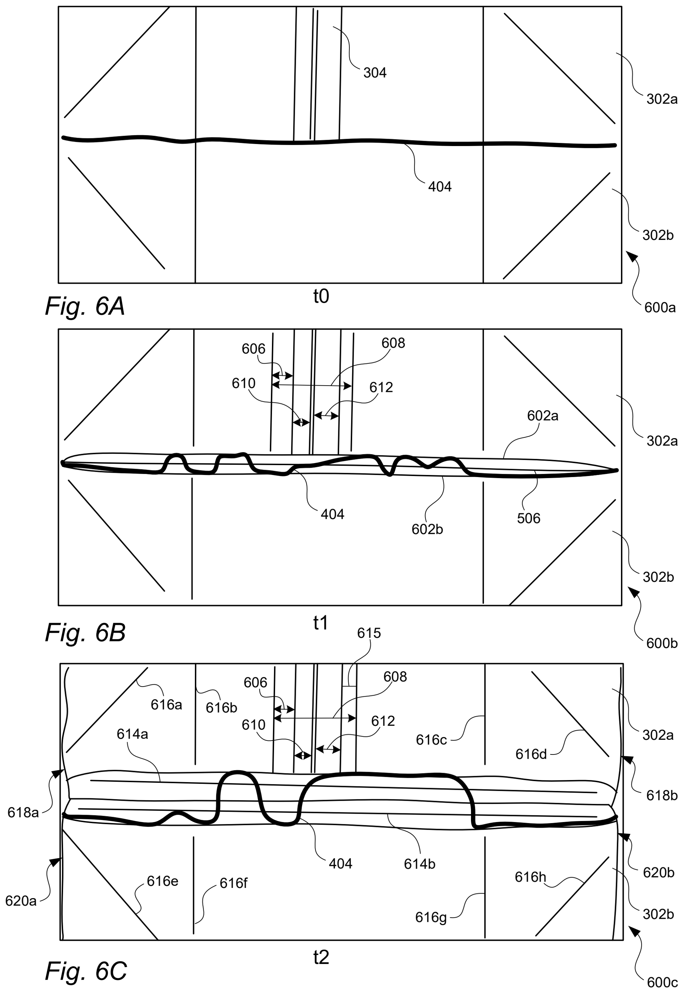

Fig. 6A to 6C illustrate examples of images generated by the camera 406. More particularly, fig. 6A illustrates a start image 600a at start time point t0, fig. 6B illustrates a first image 600b at a first point of time t1, and fig. 6C illustrates a second image 600c at a second point of time t2. As illustrated in fig. 6A, before the first and second side 302a,b is being pulled in opposite directions by e.g. using the apparatus 400 illustrated in fig. 4A, the sealing line 404 may be more or less straight.

During the course of tearing, as illustrated in fig. 6B, the sealing line 404 may dynamically evolve into a non-straight line. Put differently, during the tearing process, the sealing line 404 shift in shape, position and length. As the transversal sealing is torn apart, a first and a second sealing zone boundary 602a,b are formed. As can be seen in fig. 6B and 6C, this sealing zone will extend over time as the first and second sides 302a,b are moved apart. In addition, the intersection line 506 may also be identified in the images.

In addition to identifying the sealing line 404, and possibly also the intersection line 506 and the first and second sealing zone boundaries 602a,b, in the images 600a-c, LS features may be identified. These features may comprise a first LS distance 606, being a distance between the outer triple layer boundary 306 and the first LS strip edge 312, a second LS distance 608, being a distance between the outer triple layer boundary 306 and the inner triple layer boundary 316, a third LS distance 610 being the triple layer section 318 of the LS strip 304, a fourth LS distance 612 being the two layer section 320 of the LS strip 304. The second LS distance 608 may correspond to a so-called heat pattern, that is, a section of the laminate heated during the forming of the LS. Further, the features may also comprise a fifth LS distance 615 being a distance between the second LS strip edge 312 and the outer double layer boundary 316.

In addition, during the tearing process, edges of the first and second side 302a, 302b may also be monitored and taken into account when assessing the quality of the sealing, and also the packaging material in general. As illustrated in fig. 6c, the first side 302a may comprise a first edge 618a and a second edge 620a, and the second side 302a may comprise a first edge 620a and a second edge 620b. As illustrated in fig. 6c, as the first side and the second side are pulled apart these first and second edges 618a, 618b, 620a, 620b may change in shape and length. To be able to monitor the development of these edges, instructions may be provided to the operator on how the sample package is to be prepared. For instance, it may be required that the edges are cut straight and the first and second side are aligned with respect to the apparatus 400 before the transversal sealing is torn apart and the images 600a-c are captured. Depending on what to assess, different preparations requests may be provided to the operator. Thus, by way of example, the first and second side 302a, 302b provided in the apparatus 400 may have different width depending on what features of the transversal sealing and packaging material to assess. As illustrated in fig. 6C, in the images 600a-c, at least the images being in a later stage of the tearing process, a first and a second ridge line 614a,b can be identified. These lines stem from the use of the ridge 124 of the inductor coil 116. Further, also illustrated in fig. 6C, crease lines 616ah may be identified.

By having the sealing line 404 identified in the images 600a-c, and possibly also additional features as explained above, a more structured approach to transversal sealing assessment can be achieved. If using a machine learning model for assessing the images, the sealing line 404 and optionally also other features, may be identified in the images prior to having the images provided as inputs to the machine learning model. A benefit of such pre-processing of the images before having these input to the machine learning model is that an improved computational efficiency can be achieved. For instance, instead of having the images as such provided as inputs to the machine learning model, identified features in the images may be provided as inputs and by doing so, less data has to be processed by the machine learning model, which results in an improved computational efficiency. Another advantage is that by having the features identified up front is that this enhances transparency and clarity in the prediction-making or decision-making process, making it easier to trace and understand unusual or unexpected results.

In addition to the features mentioned above, the features taken into account during the quality assessment may also include distances between the different crease lines 616a-h.

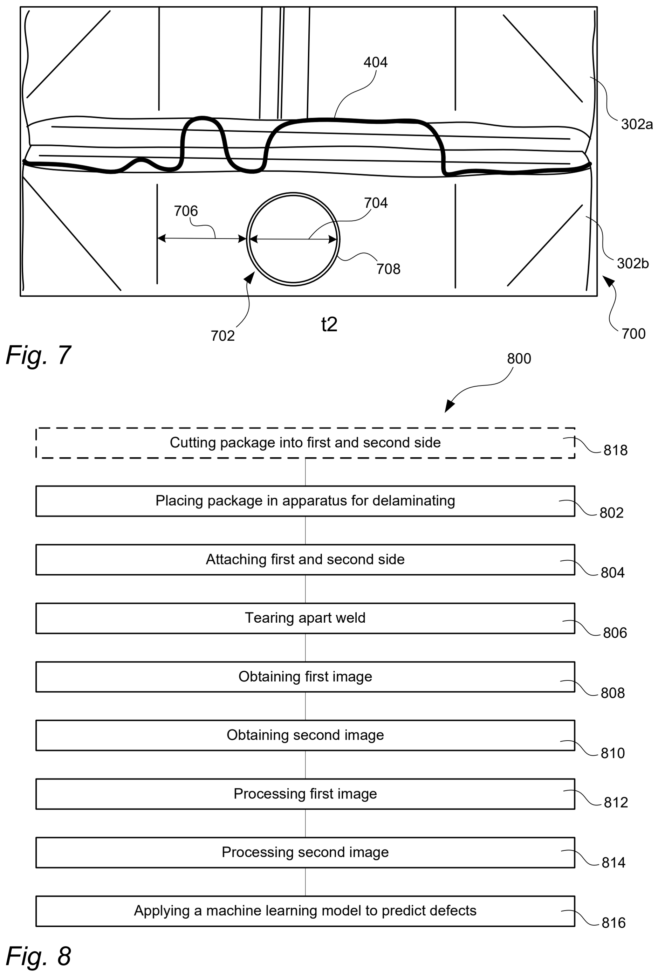

Fig. 7 illustrates another image 700 captured at the second time point t2. Unlike the package illustrated in fig. 6A to 6C, the package illustrated in fig. 7 is provided with a pre-laminated hole (PLH) 702, that is, an area over which a cap is to be placed. The PLH can be an area of the laminate in which the cellulose-based layer is removed such that this easier can be penetrated by cutting members of the cap when this is unscrewed. A number of different features related to the PLH can be identified prior to having the image 700 provided as input to the machine learning model 414. By way of example, as illustrated, the PLH features may comprise a PLH diameter 704, a PLH-to-crease line distance 706, e.g. a minimum distance to a certain crease line, and a PLH boundary 708.

Fig. 8 is a flowchart illustrating a method 800 for identifying defects in the package 102a,b. The method can comprise placing 802 the package in the apparatus 400 for delaminating the package 102a,b, attaching 804 the first side 302a to the first clamping device 402a of the apparatus 400 and the second side 302b to the second clamping device 402b of the apparatus 400, tearing 806 apart the weld 104a,b,106a,b by moving the first clamping device 402a and second clamping device 402b away from each other, obtaining 808 the first image 600b, depicting the weld 104a,b,106a,b, at the first point of time t1, obtaining 810 the second image 600c, depicting the weld 104a,b,106a,b, at the second point of time t2, wherein the second point of time t2 is subsequent to the first point of time t1, processing 812 the first image 600b by identifying the sealing line 404 at the first point of time, processing 814 the second image 600c by identifying the sealing line 404 between the first and second side 302a,b of the laminate at the second point of time, wherein the first and second image 600b,600c input to the machine learning model 414 comprise the sealing line 404 identified, applying 816 the machine learning model 414, wherein the machine learning model receives as inputs the first and second image 600b,c, and outputs a prediction of the defects, wherein the machine learning model 414 has been trained by means of reference first and second reference images indicative of the defects for reference packages associated with the first and second reference images.

Optionally, the method may further comprise, prior to placing 802 the package in the apparatus 400, cutting 818 the package 102a,b into the first and second side 302a,b.

From the description above follows that, although various embodiments of the invention have been described and shown, the invention is not restricted thereto, but may also be embodied in other ways within the scope of the subject-matter defined in the following claims.

## Claims

1. A computer-implemented method (800) for identifying defects in a package (102a,b), wherein the package is made of a laminate (126) comprising a cellulose-based layer (128) for providing robustness and an inner protective layer (130) for avoiding direct contact between the cellulose-based layer and a food product held inside the package, wherein the package comprising a weld (104a,b,106a,b) formed by that the inner protective layer is heated such that this is melted, and applying a pressure such that adherence between inner protective layers of a first and second side (302a,b) of the laminate is achieved, the method (800) comprising
placing (802) the package in an apparatus for delaminating the package (102a,b),
attaching (804) the first side (302a) to a first clamping device (402a) of the apparatus (400) and the second side (302b) to a second clamping device (402b) of the apparatus (400),
tearing (806) apart the weld (104a,b,106a,b) by moving the first clamping device (402a) and second clamping device (402b) away from each other,
obtaining (808) a first image (600b), depicting the weld (104a,b,106a,b), at a first point of time (t1),
obtaining (810) a second image (600c), depicting the weld (104a,b,106a,b), at a second point of time (t2), wherein the second point of time (t2) is subsequent to the first point of time (t1),
processing (812) the first image (600b) by identifying a sealing line (404)at the first point of time,
processing (814) the second image (600c) by identifying the sealing line (404) between the first and second side (302a,b) of the laminate at the second point of time,
wherein the first and second image (600b,600c) input to the machine learning model (414) comprise the sealing line (404) identified,
applying (816) a machine learning model (414), wherein the machine learning model receives as inputs the first and second image (600b,c), and outputs a prediction of the defects, wherein the machine learning model (414) has been trained by means of reference first and second reference images indicative of the defects for reference packages associated with the first and second reference images.

2. The method (800) according to claim 1, wherein the sealing line undergoes a dynamic evolution, shifting in shape, position and length, as the first and second sides (302a,b) are torn apart.

3. The method (800) according to claim 1 or 2, wherein the laminate (126) further comprises a light shield layer (504a,b), placed between the inner protective layer (502a,b) and the cellulose-based layer (500a,b), wherein the sealing line (404) is defined as a line in which a first light shield layer (504a) of the first side (302a) is disjoined from a second light shield layer (504b) of the second side (302b).

4. The method (800) according to any one of the preceding claims, wherein the step of processing (812) the first image (600b) further comprises identifying a first sealing zone boundary (602a) of the first side (302a) and a second sealing zone boundary (602b) of the second side (302b) at the first point of time (t1), and the step of processing (814) the second image (600c) further comprises identifying the first sealing zone boundary (602a) of the first side (302a) and second sealing zone boundary (602b) of the second side (302b) at the second point of time (t2).

5. The method (800) according to any one of the preceding claims, wherein the step of processing (812) the first image (600b) further comprises identifying an intersection line (506) between the first side (302a) and the second side (302b) at the first point of time (t1), and the step of processing (814) the second image (600c) further comprises identifying the intersection line (506) at the second point of time (t2), wherein the intersection line (506) is defined as a lowermost line between the first and second side (302a,b).

6. The method (800) according to any one of the preceding claims, wherein the step of processing (812) the first image (600b) further comprises identifying longitudinal sealing (LS) features (606, 608, 610 ,612) related to an LS strip (304) protecting an edge of the laminate (126) at the first point of time (t1), and the step of processing (814) the second image (600c) further comprises identifying the LS features (606, 608, 610, 612) at the second point of time (t2), wherein the LS features are chosen from a group comprising a first LS distance (606) between an outer triple layer boundary (306) and a first LS strip edge (310), a second LS distance (608) between the outer triple layer boundary (306) and an inner triple layer boundary (316), a third LS distance (610) being a triple layer section (318) of the LS strip (304), a fourth LS distance (612) being a two layer section (320) of the LS strip (304).

7. The method (800) according to any one of the preceding claims, wherein the step of processing (812) the first image (600b) further comprises identifying crease lines (616a-h), provided on the laminate (126) to facilitate folding of the laminate (126) into the package (102a,b), at the first point of time (t1), and the step of processing (814) the second image (600c) further comprises identifying the crease lines (616a-h) at the second point of time (t2).

8. The method (800) according to any one of the preceding claims, wherein the second side (302b) comprises a pre-laminated hole (PLH) (702), wherein the step of processing (812) the first image (600b) further comprises identifying PLH features (704, 706, 708) related to the PLH (702) at the first point of time (t1), and the step of processing (814) the second image (600c) further comprises identifying the PLH features (704, 706, 708) at the second point of time (t2), wherein the PLH features (704, 706, 708) are chosen from a group comprising a PLH diameter (704), a PLH-to-crease line distance (706) and a PLH boundary (708).

9. The method (800) according to any one of the preceding claims, wherein the machine learning model (414) is a neural network.

10. The method (800) according to any one of the preceding claims, further comprising, prior to the step of placing (802) the package (102a,b) in the apparatus (400),
cutting (818) the package (102a,b) into the first and second side (302a,b).

11. A predictor device (408) comprising a processing unit (410) configured to carry out the method according to any one of the preceding claims.

12. A system (416) for quality assessment of packages, said system comprising an apparatus (400) for delaminating a package (102a,b), a camera (406) for capturing images, and a predictor device (408) according to claim 11.

13. A packaging line (418) for producing packages (102a,b) comprising a system (416) for quality assessment according to claim 12.

14. A computer program product, loadable in a memory of at least one processing unit and comprising instructions suitable for performing the steps of the method according to any of claims 1 to 10.

15. A trained machine learning model (414) configured for use in the method according to any one of the claims 1 to 10.
